# EUROPEAN PATENT APPLICATION

(11) **EP 4 534 973 A1**
(43) Date of publication of application: **09.04.2025**
(21) Application number: 24203178.9
(22) Date of filing: 27.09.2024
(51) Int. Cl.: G01N 3/32, G01M 5/00

(54) **RESONANCE BENDING FATIGUE TEST BENCH WITH POSITION OF THE CONTROLLED TRACKING SUPPORTS**

(30) Priority: 02.10.2023 IT 202300020259
(71) Applicant: Università di Pisa, 56126 Pisa (IT)
(72) Inventor: SANTUS, CIRO, 56126 PISA (IT); BERTINI, LEONARDO, 56126 PISA (IT); BEGHINI, MARCO, 56126 PISA (IT); ROMANELLI, LORENZO, 56126 PISA (IT); BURCHIANTI, ALESSANDRO, 56126 PISA (IT)
(74) Representative: Sarpi, Maurizio

(57) **Abstract**

Resonance bending fatigue test bench on tubular components (1), comprising at least two supports (2, 2') configured to support the component under test at the position of the nodes of the deformed part along the axis (a) of the component (1); an eccentric mass (6) removably applicable to a first end (4) of the component (1); a motor (3) connected to the eccentric mass (6) for transmitting a rotational motion by means of a kinematic mechanism (5); further comprising means (11) for continuously detecting the vibrations at the sides of at least one node of the deformed part (1); an electronic unit (U) operatively connected to said detection means (11) for determining the axial position of the nodes of the deformed part of the component (1) based on the detected vibrations; at least one support (2) movable along the axis (a) of the component (1); actuating means (7) operatively connected to the movable support (2) for imparting to said movable support (2) a displacement tracking the position of the corresponding node of the deformed part calculated by the electronic unit (U) during the test.

## Description

### Sector of the Invention

The invention relates to a resonance bending fatigue test bench, in particular for checking the bending fatigue strength on tubular components for civil or industrial applications, for example tubular drill pipe components of the type used for oil drilling operations or for exploratory purposes.

### Background Art

At present, test benches are known which are dedicated to checking portions of drill pipes with the connection between two tubular elements in the centre, which are subjected to bending excitation, reaching the resonance condition at the first proper frequency, by means of one or more eccentric masses.

In these benches, the drill pipe is supported at the nodes of the deformed part which are positioned at the beginning of the test on the basis of a dynamic calculation with numerical techniques.

By way of example, a test bench is known from WO2016102968A1 in which it is possible to perform a stress with mechanical resonance so as to experimentally evaluate a certain service life of an operating structure with variable load. Such a document does not show supports along intermediate positions of the beam-like structure at the resonance nodes.

Examples of resonance machines for testing tubular elements with rotating fatigue are disclosed in other documents, for example in WO2014161858A1, based on the idea of setting the positions of the supports "once", at the beginning of the test, at the nodal positions identified by means of finite element calculation.

WO2020174068A1 shows a further example of application in which the supports of the structure are fixed during the fatigue test.

The article "A modal approach to identify fatigue damage in threaded connections of large scale tubular structures in a resonant bending test rig." - T. Bui, E. Reynders, G. De Roeck, J.V. Wittenberghe, P. De Baets, P., W. De Waele - Proceedings of the 8th International Conference on Structural Dynamics, EURODYN 2011, pp. 1623-1628, 2011 includes a test bench in which it is possible to vary the position of the node support in order to perform fatigue tests.

The known systems therefore present significant drawbacks in relation to the effectiveness of the fatigue test since they do not allow the test to be performed continuously, dynamically varying the position of the nodal supports, or during the operation of the machine, when the test is in progress.

Such a drawback is due in particular to the fact that even if the initial position of the supports were correct, during the execution of the test the operating conditions may change so that the correction of the position of the nodes becomes essential for the correct performance of the test since, although the displacement of the node may be modest with respect to the length of the structure to be checked, the effect of the deviation is still considerable, both in terms of the operating regularity of the machine, and as a guarantee of the correct stress applied to the structure.

### Object of the invention

Therefore, the main object of the invention is to solve the problems and drawbacks of the known systems and to propose a test bench capable of subjecting a tubular structure to a resonance bending fatigue test also according to the variation in the position of the nodes of the deformed part during the test.

### Summary of the invention

These objects have been achieved with a test bench according to at least one of the appended claims in which the introduction of at least one intermediate support element along the axis of the tubular element (typically the support closest to the resonance-inducing rotating eccentric mass) is provided, in turn supported by flexible and movable elements according to the direction of the axis of the element under test, so as to compensate for variations in the position of such a node due to different operating conditions which can arise or be required during the execution of the tests, for example by means of a feedback control on the amplitude of the oscillations on the sides of the support.

A first advantage is that it allows to perform more reliable tests with respect to the state of the art, which take into account any changes in the position of the nodes of the deformed part without the need to interrupt the test.

A further advantage is that the use of the support according to the present invention is mechanically simple and offers the possibility of applying an instrumentation, such as accelerometers, to the axial ends of the bushing, which allows a constant monitoring of the vibration level at the support and to have the indication of the direction of displacement to be applied, so as to obtain the correction of the position of the support during the operation of the machine.

A further advantage of the present invention with respect to the known solutions is that it is possible to execute tests with greater accuracy in terms of the final experimental result, since the stress induced on the component under examination lacks spurious harmonics which therefore make the tests produced more reliable.

### List of drawings

These and other advantages will be better understood by any person skilled in the art from the following disclosure and the accompanying drawings, given as a non-limiting example, in which:
- Fig.1 schematically shows the behaviour of the portion of the component resting on an intermediate support along the component axis in a test bench according to the invention;
- Fig.2 schematically shows the variation of the position of the support in a test bench according to the invention;
- Fig.3 shows an example of harmonic response analysis by means of finite element (EF) calculation, from which the variable position of the node is derived;
- Fig.4 shows an embodiment of an intermediate support according to the invention, movable along the axis of the tubular component under test, with the presence of support wheels between the tubular element and the bushing of the support, resting on four sliding feet consisting of low-friction elements;
- Fig.5 schematically shows an embodiment of a bushing according to the invention interposed between tubular component and support, provided with transverse-axis wheels and accelerometers at the two ends;
- Fig.6 shows a control diagram of the displacement of the movable support according to the invention;

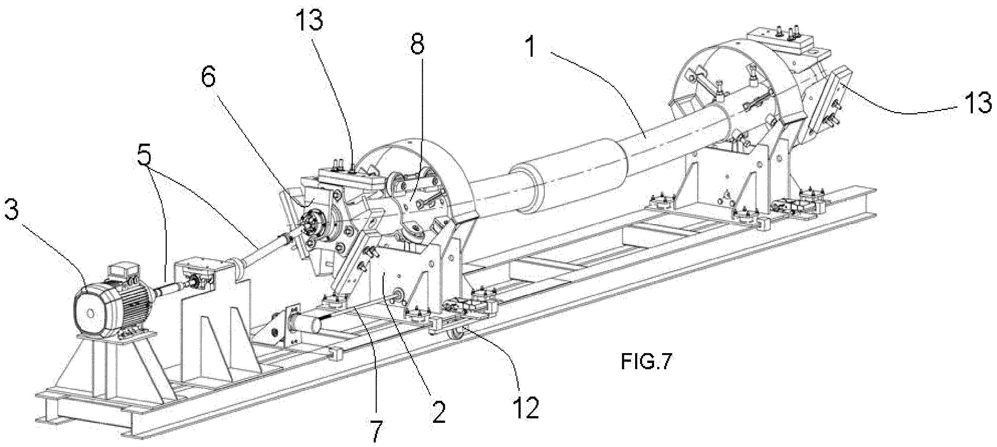

- Fig.7 shows an overall view of the test bench of the invention with a movable support.

### Detailed description

With reference to the accompanying drawings, a rotary resonance bending fatigue test bench on tubular components 1 according to the invention is disclosed, equipped with fixed masses 13 and an eccentric mass 6.

The bench comprises two supports 2, 2' which support the component under test at the position of the nodes of the deformed part along the axis (a) of the component itself, calculated for example by means of finite element analysis (EF).

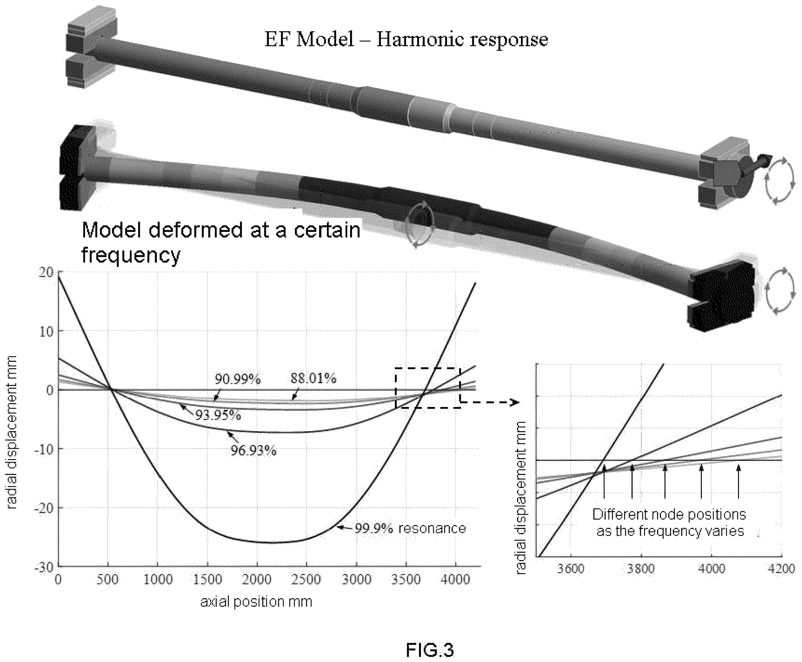

Figure 3 shows an example of harmonic response analysis of a tubular component by finite element calculation wherein the effect of the eccentric rotating mass 6 constrained to one end of the component is simulated.

The displacement of the position of the node of the deformed part is evident in the figure, in particular that near the rotating mass 6, for different frequencies close to that of resonance and shown in the graph.

To obtain the rotation of the deformed part of the component 1, the bench further comprises a motor 3, for example an electric motor connected by means of a kinematic mechanism 5 to an eccentric mass 6, applied to the component 1 in a removable manner, to transmit a rotational motion to the eccentric mass 6.

As known, the position of the nodes of the deformed part depends on the physical mechanical features of the component as well as on the rotation frequency and the eccentric mass 6 applied.

In order to initially place the supports 2, 2' at the nodes of the deformed part, it is therefore envisaged to calculate the position of the nodes with techniques known per se, at which to position the supports 2, 2'.

According to the invention, at least one of the supports 2, 2', and in particular at least the support 2 closest to the eccentric mass is movable along the axis of the component 1, being able to be moved by actuating means 7 for example by means of a ball screw driven by a dedicated motor. However, it is understood that the actuator 7 may be of a different type also based on the required application.

In a preferred embodiment, the movable support 2 is mounted on sliding contacts 12, but it is understood that different solutions may be envisaged, such as rolling contacts.

Advantageously, with the solution adopted the actuator 7 is able, during the test, to impart to the support 2' a tracking displacement of the position of the corresponding node of the deformed part calculated in real time by an electronic unit U based at least on the oscillations of the component 1 on the two sides of the node, the amplitudes of which indicate the extent of the correction required.

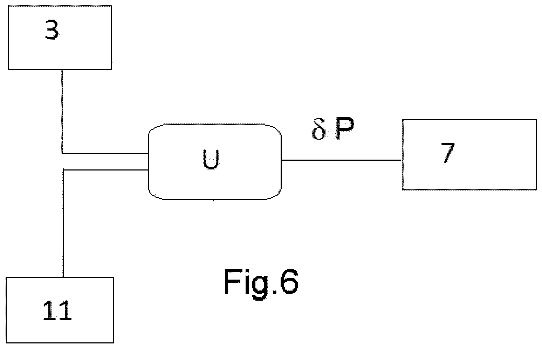

A possible control logic is shown in the diagram of Fig.6, in which the calculation unit U receives data, by means of cables 39 from the accelerometers 11, related to the vibrations on the sides of the node and possibly receives data from the motor 3 related to the rotation frequency. Based on such inputs, the unit U calculates the necessary corrective displacement and commands the actuator 7 to execute such a displacement.

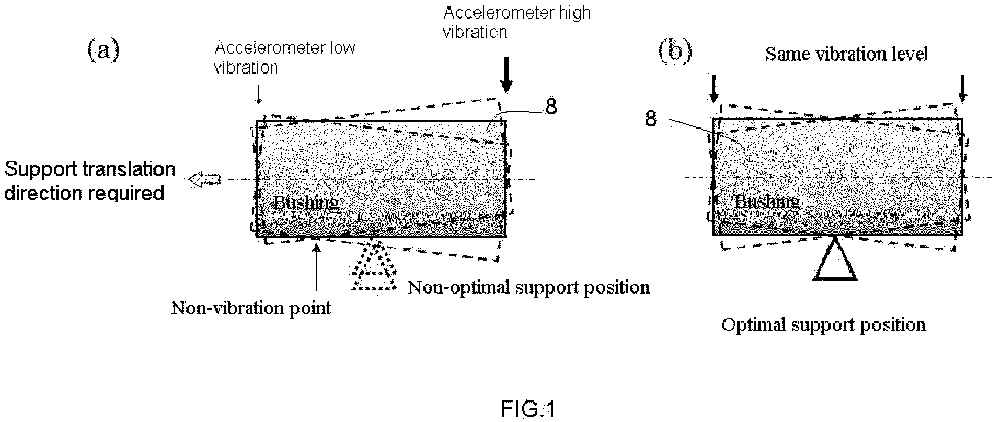

Fig. 1 schematically shows the behaviour of the portion of the component resting on an intermediate support bushing in a test bench according to the invention in the following cases: (a) a non-optimal bushing position, wherein the support undergoes a spurious vibration, and (b) a correct bushing position after corrective displacement, wherein the support in a central position does not vibrate and its ends undergo the same level of vibration.

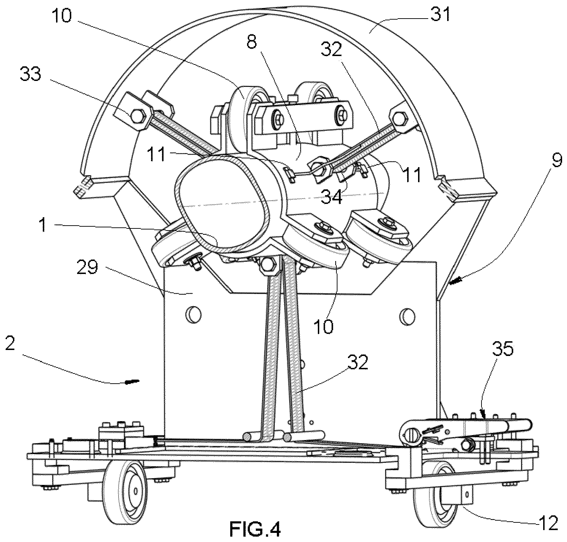

Preferably, the vibrations of the support 2 are detected by means of two accelerometers 11, better visible in Fig.4, axially spaced so as to result in use on the two sides of the axial position of the deformed node of the component 1 and connected to the unit U to continuously send the data related to the radial oscillation of the component 1 to the two sides of the node. In particular, with this solution the identification of the accelerometer 11 which reports a greater signal will give the unit U the indication of the direction of displacement to be imposed on the support, until the same level of vibration is obtained on both sides of the support.

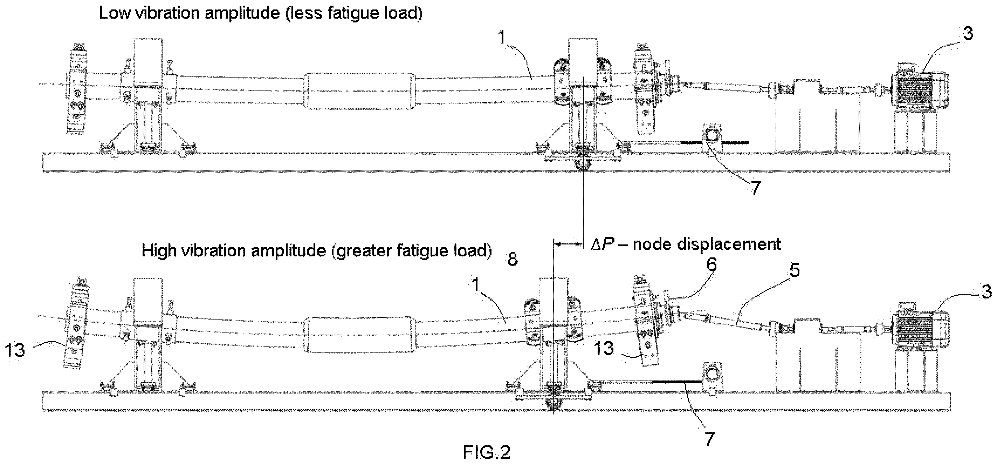

Fig. 2 schematically shows the variation δP of the position of the support in a test bench according to the invention, represented on an enlarged scale for a better understanding, executed by the actuator 7 so as to position the support correctly at the node of the deformed part, due to the effect of different intensities of the stress applied to the tubular element under test.

Merely by way of example, the request for repositioning the supports, so as to overlap the nodes of the deformed part, may be in the order of 100-200 mm for tubular structures of about 4.5 m and pipe diameter of the order of 150 mm, an extent which will however depend on the actual operating conditions.

In a preferred embodiment, at least one movable support 2, 2' of the test bench comprises an interposition element 8 arranged between the component under test and the support itself, supported by the support 2 with deformable elements 32 and configured to be able to slide axially along the component 1.

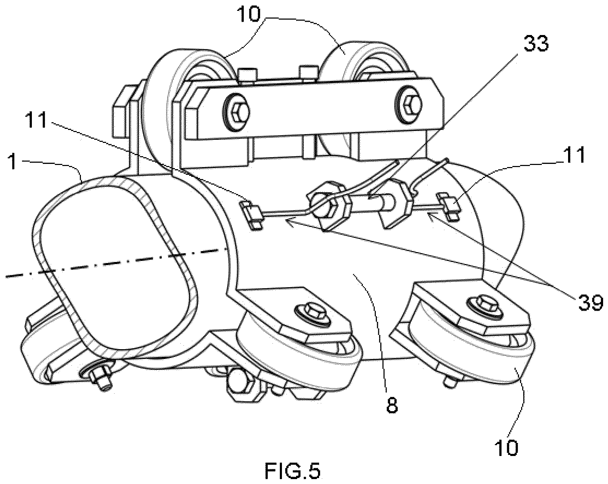

Preferably, with reference to the example illustrated in Figures 4, 5, the frame 9 of the support 2, 2' is formed by a base 29 carrying an arch plate 31 above. Belts 32 are attached to the base 29 and to the arch 31, subtended between coupling points 33 integral with the support 2 and coupling points 34 integral with the interposition element 8.

In particular, three belts 32 are provided, of which two are subtended between the interposition element 8 and arch 31 and one between interposition element 8 and base 29, so that the belts are arranged at 120° converging at a fixed point in the centre of the bushing 8.

One or more of the belts 32, in particular the belts 32 subtending between the base 29 and the interposition element 8, can also provide an adjustable pre-tensioning system consisting, for example, of a ratchet rod 35 capable of adjusting the tension of the system of belts 32.

In the example disclosed, the interposition element comprises a cylindrical bushing 8 on which the accelerometers 11 are applied and which slides axially along the component 1 by means of a distribution of wheels 10 with a transverse axis.

In the example of Figures 4, 5, three pairs of axially spaced and angularly equispaced wheels are provided, but it is understood that different solutions may be provided for the sliding support of the component 1, although the rolling contact is in this case to be preferred with respect to a sliding contact, given the oscillatory movement which provides high accelerations, both translational and angular.

In the use of the test bench of the invention, once the component 1 is installed on the movable supports 2 and/or 2', the eccentric mass 6 is applied, and the mass 6 itself is connected to the motor 3, a first step is carried out to calculate the initial positions of the nodes of the deformed part at which the supports 2, 2' will be arranged.

Starting from this configuration, during the test the calculation unit U, based on the data received from the accelerometers 11, calculates in real time the displacement of the axial position of at least the node of the deformed part close to the eccentric mass, and commands the actuator 7 to impart a corresponding displacement to the movable support, proceeding with a tracking logic until the condition of correct positioning shown in Figure 1 (b).

The invention disclosed has significant advantages with respect to the solutions currently available.

In fact, It is known that the position of the nodes of the deformed part can be determined by means of calculation with the finite elements, however, the inventors have found that this position is neither perfectly predictable nor constant during the test.

The position of the node can in fact vary, for example due to the decrease in stiffness of the structure during the propagation of the fatigue crack, in the final step of the test. Furthermore, the node position varies as a function of the applied load since the difference between the applied frequency and the resonance frequency is modulated if a variable stress intensity is required during the test.

The position of the node evaluated in perfect resonance (by means of modal analysis) is therefore usually inaccurate since the operating frequency is almost equal to that of resonance but is slightly lower in order to efficiently adjust the amplitude of the stress.

Thanks to the invention, these limits have been overcome and it has been possible to perform resonance bending fatigue tests, continuously correcting the position of the supports according to the actual position of the nodes of the deformed part without requiring stopping the test.

The present invention has been disclosed according to preferred embodiments, but equivalent variants can be designed without departing from the scope of the agreed protection.

## Claims

1. Rotary resonance bending fatigue test bench on tubular components (1), comprising:
at least two supports (2, 2') configured to support the component under test at the position of the nodes of the deformed part along the axis (a) of the component (1),
an eccentric mass (6) removably applicable to a first end (4) of the component (1);
a motor (3) connected to the eccentric mass (6) to transmit a rotational motion by means of a kinematic mechanism (5);
**characterized in that** it comprises
means (11) for continuously detecting the vibrations on the sides of at least one node of the deformed part,
an electronic unit (U) operatively connected to said detection means (11) for determining the axial position of the nodes of the deformed part of the component (1) based on the detected vibrations,
at least one support (2) movable along the axis (a) of the component (1),
actuating means (7) operatively connected to the movable support (2) to impart to said movable support (2) a tracking displacement of the position of the corresponding node of the deformed part calculated by the electronic unit (U) during the test.

2. Test bench according to claim 1, wherein said vibration detection means comprise at least one pair of accelerometers (11) associated with the component (1) and axially spaced so as to result in the use on both sides of the axial position of the node of the deformed part.

3. Test bench according to claim 1 or 2, wherein at least one support (2, 2') comprises an interposition element (8) arranged between the component under test and the support itself, supported by the support with deformable elements (32) and configured to be able to slide axially along the component (1).

4. Test bench according to claim 3, wherein said interposition element comprises a cylindrical bushing (8) fixed to a frame (9) of the support (2, 2') and configured to radially contain and axially slide along the component (1).

5. Test bench according to claim 4, wherein said bushing (8) is slidable along the component (1) by means of a distribution of wheels (10) with transverse axis, preferably three pairs of wheels spaced axially and equispaced angularly.

6. Test bench according to claim 4 or 5, wherein said accelerometers (11) are applied to said bushing (8).

7. Test bench according to one of claims 4-6, wherein said frame (9) is formed by a base (29) carrying an arch plate (31) above and said deformable element (32) comprises tensionable belts underlying the frame (9) and the bushing (8).

8. Test bench according to one of the preceding claims, wherein said at least one movable support (2, 2') is movable on sliding contacts (12).

9. Test bench according to one of the preceding claims, wherein said actuating means (7) comprise a motorized actuator with ball screw.

10. Method for executing rotary resonance bending fatigue tests on tubular components (1), by means of a test bench comprising:
at least two supports (2, 2') configured to support the component under test at the position of the nodes of the deformed part along the axis (a) of the component (1), of which at least one is axially movable,
an eccentric mass (6) removably applicable to a first end (4),
a motor (3) connected to the eccentric mass (6) to transmit a rotational motion by means of a kinematic mechanism (5),
actuating means (7) operatively connected to the movable support (2) to impart axial displacements,
**characterized in that** it comprises the following steps
identifying the initial axial position of the nodes of the deformed part of the component (1),
placing the supports (2, 2') at the calculated initial position of the nodes,
during the test, calculating the displacement of the axial position at least of the node of the deformed part close to the eccentric mass,
displacing the corresponding support with tracking of the position of the node of the deformed part calculated by the electronic unit (U) during the test based on the amplitude of the oscillations of the component on the sides of the node.
